# EUROPÄISCHE PATENTANMELDUNG

(11) **EP 3 260 709 A1**
(43) Veröffentlichungstag der Anmeldung: **27.12.2017**
(21) Anmeldenummer: 16176043.4
(22) Anmeldetag: 23.06.2016
(51) Int. Cl.: F16B 11/00, F16B 37/04

(54) **VERBUNDBAUTEIL, BEFESTIGUNGSELEMENT UND VERFAHREN ZU DESSEN HERSTELLUNG**

(71) Anmelder: Newfrey LLC, New Britain, CT 06053 (US)
(72) Erfinder: Briel, Karl-Heinz, 35394 Giessen (DE); Linke, Matthias, 35394 Giessen (DE)
(74) Vertreter: SBD IPAdmin

(57) **Zusammenfassung**

Verbundbauteil (18) mit einem schaftförmigen Ankerabschnitt (14, 14'), der einen Grundkörper (20), ein erstes und ein zweites Endstück (22, 24, 22', 24') aufweist, einem Auftragungsabschnitt (44) zum Auftragen eines Klebstoffes, einem Flanschelement (12), wobei das Flanschelement (12) mit einem Basiskörper (28), einer Durchgangsöffnung (30) und einer Aufnahmevertiefung (32) ausgebildet ist, wobei der Ankerabschnitt (14, 14') in der Durchgangsöffnung (30) eingesetzt ist, wobei die Aufnahmevertiefung (32) und das erste Endstück (22, 22') eine Ringnut (34) ausbilden, und wobei die Ringnut (34) teilweise den Auftragungsabschnitt (44) definiert.

## Beschreibung

### Gebiet der Erfindung

Die vorliegende Erfindung betrifft ein Verbundbauteil mit einem schaftförmigen Ankerabschnitt, der einen Grundkörper, ein erstes und ein zweites Endstück aufweist sowie einen Grundkörper, welcher sich zwischen dem ersten und dem zweiten Endstück entlang einer Fügeachse erstreckt, einem Flanschabschnitt und einem Auftragungsabschnitt zum Auftragen eines Klebstoffes.

Ferner betrifft die vorliegende Erfindung ein Befestigungselement mit einem Verbundbauteil dieser Art und einem Klebstofftropfen, sowie ein Verfahren zu dessen Herstellung.

### Hintergrund der Erfindung

Auf dem Gebiet der Fügetechnik ist es beispielsweise bekannt, Elemente, wie Bolzen, insbesondere Schweißbolzen oder Einpressbolzen, mit Werkstücken zu verbinden. Schweißbolzen werden üblicherweise mit einem Lichtbogenschweißverfahren auf die Werkstücke geschweißt (insbesondere wenn die Werkstücke metallisch sind). In der Automobilindustrie werden solche Elemente häufig benutzt, um auf Karosserieblechen andere Elemente wie zum Beispiel Befestigungsclips für Kabel, Leitungen etc. zu befestigen. Aufgrund der Tatsache, dass im Karosseriebau von Kraftfahrzeugen vermehrt weniger gut schweißbare bzw. nichtmetallische Verbundmaterialien eingesetzt werden, wie Kunststoffe, Faserverbundbauteile, etc., hat die Klebetechnik sich als Fügeverfahren insbesondere im Karosseriebau etabliert. Anstatt die Bolzen auf Werkstücke zu schweißen, sind diese aufgeklebt.

Bekannt ist es dabei generell, einen Klebstoff auf eine Fügefläche eines Elements aufzutragen, wobei der in der Regel erwärmt aufgetragene Klebstoff anschließend wieder erkaltet und abtrocknet. Das so hergestellte Befestigungselement (das Element mit dem Klebstoff) soll dann transportierbar sein, beispielsweise von einem Ort der Herstellung zu einem Ort, an dem das Befestigungselement auf das Werkstück wie ein Karosserieblech zu kleben ist.

Bei dem eigentlichen Klebevorgang wird der Klebstoff dann aktiviert bzw. reaktiviert, wobei der Klebstoff in der Regel erneut erwärmt wird.

Im Karosseriebau von Kraftfahrzeugen wird in der Regel eine Vielzahl derartiger Befestigungselemente auf Karosserieabschnitte geklebt. Dies erfolgt in der Regel durch automatisierte Roboteranlagen, bei denen die Befestigungselemente automatisiert zugeführt werden.

Bei den oben genannten Verfahren zum Herstellen von Befestigungselementen und zum Herstellen von Klebstoffverbindungen mittels solcher Befestigungselemente erreicht der Klebstoff erst bei dem endgültigen Klebeprozess seine maximale Festigkeit. In der Transportphase ist der Klebstoff empfindlich gegenüber thermisch induzierten Spannungen und mechanischer Beanspruchung. Dies kann dazu führen, dass der Verbund von Klebstoff und Verbundbauteil noch vor dem Erreichen der endgültigen Fügeposition gelöst wird und einer der beiden Verbundpartner verlorengeht. Dies kann beispielsweise während des Transportes erfolgen, wenn derartige Befestigungselemente als Schüttgut behandelt werden, und/oder während einer automatisierten Zuführung von einem Reservoir zu einem robotergestützten Fügegerät.

Das Dokument DE102012021210 offenbart verschiedene Ausführungsformen eines Verbundbauteils und eines Befestigungselements.

Insbesondere Dokument DE102012021210 offenbart eine Ringkonturfläche, die auf einer Fügefläche gebildet ist. Durch das Ausbilden einer Ringkonturfläche, die quer zu der Führungsfläche bzw. quer zu dem Auftragungsabschnitt ausgerichtet ist und die radial innerhalb eines Außenumfanges des Auftragungsabschnittes angeordnet ist, ist es möglich, den Klebstoff um die Ringkonturfläche herum aufzubringen. Die Klebstoffschmelze füllt diese Ringkonturfläche im heißen, flüssigen unvernetzten Zustand vorzugsweise vollständig aus. Bei der Schrumpfung und der unterschiedlichen Wärmeausdehnung zwischen Verbundbauteil und Klebstoff wird hierbei vorzugsweise eine kraftschlüssige Verklammerung zwischen dem Klebstoff und der Ringkonturfläche erzielt, insbesondere in radialer Richtung.

Diese Ausführungsform ist dann möglich, wenn das Verbundbauteil Größenordnungen aufweist, die für eine Verformung, beziehungsweise eine Kaltverformung, geeignet sind. Für bestimmte Befestigungsaufgaben ist es jedoch wünschenswert, deutlich größere Verbundbauteile (und besonders deutlich größere Flanschelementdurchmesser) einzusetzen. Ab bestimmten geometrischen Abmessungen des Verbundbauteils (zum Beispiel wenn das Verbundbauteil ein Flanschelement mit einem Durchmesser über 16 Millimetern aufweist) wird eine monolithische Ausführung durch ein Umformverfahren unwirtschaftlich bzw. unmöglich, benötigt zu große Kräfte und hat zu große Toleranzschwankungen. Andere Fertigungsverfahren bzw. andere Bolzenkonzepte (Verbundbauteilkonzepte) müssen dann ausgewählt werden.

Des Weiteren besteht der Wunsch, Verbundbauteile mit spezifischen Eigenschaften in bestimmten Abschnitten einzusetzen. So kann es beispielsweise erforderlich sein, das Flanschelement aus einem gut umformbaren Werkstoff herzustellen. Jedoch wird für den Ankerabschnitt eine hohe Festigkeit gefordert, was einen anderen Werkstoff (wie beispielsweise Faser-Kunststoff, verstärkter Kunststoff, usw.) erfordert, welcher ggf. nicht gut umformbar ist.

Darüber hinaus besteht das Bedürfnis, Abschnitte weiterzuentwickeln, die besonders gut den Klebstoff halten und/oder die Befestigungsaufgabe besser lösen.

Vor diesem Hintergrund ist es eine Aufgabe der Erfindung, ein verbessertes Verbundbauteil, ein verbessertes Befestigungselement und ein verbessertes Verfahren zum Herstellen eines derartigen Befestingungselementes anzugeben, das vorzugsweise wenigstens einen der oben beschriebenen Nachteile vermeidet.

### Zusammenfassung der Erfindung

Die oben gennannte Aufgabe wird bei dem eingangs genannten Verbundbauteil dadurch gelöst, dass das Verbundbauteil mehrteilig, vorzugsweise zweiteilig ausgebildet ist. Dazu weist das Flanschelement eine Durchgangsöffnung und eine Aufnahmevertiefung auf, wobei der Ankerabschnitt in die Durchgangsöffnung eingesetzt ist, wobei der Ankerabschnitt mit dem Flanschelement gefügt ist, wobei das erste Endstück sich in die Aufnahmevertiefung erstreckt, wobei die Aufnahmevertiefung und das erste Endstück eine Ringnut ausbilden; wobei die Ringnut teilweise den Auftragungsabschnitt definiert.

Durch den zweiteiligen Aufbau (Ankerabschnitt und Flanschelement) kann das Problem des maximalen Umformgrads des Umformungsprozesses (bzw. Kaltumformungsprozess) bezogen auf den max. Durchmesser des Flanschelements umgangen werden. Des Weiteren lässt sich auf diese Weise einfach und kostengünstig ein Verbundbauteil herstellen, welches einen ausreichend großen Flanschelementdurchmesser aufweist und bei Bedarf aus unterschiedlichen Werkstoffen (Aluminium, Metall, Faser-Kunststoff, verstärkter Kunststoff, usw.) herstellbar ist. Die Verbindung der zwei Teile (i.e. des Ankerabschnitts und des Flanschelements) bildet die Ringnut direkt aus, und weitere Fertigungsverfahren, wie zum Beispiel das Fräsen einer Ringnut, werden vermieden. Die Form und die Größe der Ringnut sind dann direkt von der Ankerabschnitts - und Flanschelement- Form bestimmt.

Gemäß einer weiteren bevorzugten Ausführungsform ist die Aufnahmevertiefung am Umfang der Durchgangsöffnung angeordnet. Die Aufnahmevertiefung wird durch eine Einsenkung um die Durchgangsöffnung gebildet. Die Aufnahmevertiefung wirkt mit dem ersten Endstück zusammen. Die Ausgestaltung der Aufnahmevertiefung ist besonders geeignet um eine Gleichverteilung der Kräfte zu erlauben.

In einer bevorzugten Ausführungsform ist die Ringnut um die Fügeachse umlaufend ausgebildet. Bei dieser Ausführungsform kann der Klammerungseffekt in allen radialen Richtungen erfolgen, so dass sich die Anhaftung zwischen Klebstoff und Auftragungsabschnitt noch weiter verbessert.

In einer weiteren bevorzugten Ausführungsform ist das erste Endstück als eine Erweiterung des Querschnitts des Grundkörpers ausbildet. Bei dieser Ausführungsform bildet das erste Endstück einen axialen Anschlag für den Ankerabschnitt in dem Flanschelement aus.

In einer besonders bevorzugten Ausführungsform weist die Ringnut eine innen liegende Innenwand und eine außen liegende Innenwand auf. Die innen liegende Innenwand ist durch den Ankerabschnitt ausgebildet. Die außen liegende Innenwand ist durch das Flanschenelement ausgebildet.

In einer weiteren bevorzugten Ausführungsform weist die innen liegende Innenwand einen von Null verschiedenen Winkel zu der Fügeachse auf, welcher sich durch das Fügen, vorzugsweise Nieten, ergibt. Anders gesagt, die innen liegende Innenwand liegt in der gefügte Zustand beispielsweise schräg zur Fügeachse.

In einer weiteren bevorzugten Ausführungsform weist das erste Endstück eine Endfläche auf, die quer zur Fügeachse verläuft. Das Flanschelement weist eine Fügefläche auf, die quer zur Fügeachse verläuft. Die Ringnut, die Endfläche und zumindest ein Teil der Fügefläche bilden den Auftragungsabschnitt aus.

In einer weiteren bevorzugten Ausführungsform ist die Höhe der Aufnahmevertiefung kleiner als die Hälfte der Höhe des Basiskörpers entlang der Fügeachse.

Ferner wird die obige Aufgabe gelöst durch ein Befestigungselement mit einem Verbundbauteil wie bereits beschrieben und einem auf den Auftragungsabschnitt aufgebrachten Klebstofftropfen.

In einer weiteren bevorzugten Ausführungsform weist die Ringnut eine Hinterschneidung auf, die den Klebstofftropfen hält.

Schließlich wird die obige Aufgabe gelöst durch ein Verfahren zum Herstellen eines Befestigungselementes mit den Schritten:
- Bereitstellen eines schaftförmigen Ankerabschnitts, der einer Grundkörper, ein erstes und ein zweites Endstück aufweist, der Grundkörper erstreckt sich zwischen dem ersten und dem zweiten Endstück entlang einer Ankerachse;
- Bereitstellen eines Flanschelements mit einem Basiskörper, einer Durchgangsöffnung und einer Aufnahmevertiefung;
- Einsetzen des Ankerabschnitts in die Durchgangsöffnung, das erste Endstück erstreckend in der Aufnahmevertiefung, wobei die Aufnahmevertiefung und das erste Endstück eine Ringnut ausbilden und die Ringnut teilweise einen Auftragungsabschnitt definiert;
- Verbinden des Ankerabschnitts mit dem Flanschelement;
- Auftragen eines erwärmten Klebstoffes auf wenigstens den Auftragungsabschnitt und in die ausgebildete Ringnut, um die herum der Klebstoff aufgebracht wird;
- Abkühlen des Klebstoffes, derart, dass das so hergestellte Befestigungselement transportierbar ist und der Klebstoff zu einem späteren Zeitpunkt reaktivierbar ist, um das Befestigungselement auf ein Werkstück zu kleben.

In einer weiteren bevorzugten Ausführungsform ist der Ankerabschnitt mit dem Flanschelement durch Umformung verbunden.

In einer weiteren bevorzugten Ausführungsform bildet der Klebstoff auf dem Auftragungsabschnitt eine Linsenform.

In einer weiteren bevorzugten Ausführungsform erhalten der Ankerabschnitt und das Flanschelement Korrosionschutz und der Klebstofftropfen bildet eine Korrosionsschutzversiegelung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Beschreibung der begleitenden Zeichnungen

Ausführungsbeispiele der Erfindung sind in den Zeichnungen dargestellt und werden in der nachfolgenden Beschreibung näher erläutert. Es zeigen:
Fig. 1 eine schematische Längsschnittansicht eines erfindungsgemäßen Befestigungselements mit einem Verbundbauteil bestehen aus einem schaftförmigen Ankerabschnitt und einem Flanschelement, die zusammen einen Auftragungsabschnitt zum Auftragen eines Klebstoffes definieren, und einem Klebstofftropfen;
Fig. 2 den Ankerabschnitt von Fig. 1 vor dem Fügen mit dem Flanschelement;
Fig. 3 das Flanschelement von Fig. 1;
Fig. 4 den Ankerabschnitt von Fig. 2 und das Flanschelement von Fig. 3 zusammengesteckt und vor dem Fügen;
Fig. 5 eine detaillierte Ansicht von in Fig. 1 benanntem Detail V;
Fig. 6 eine schematische Längsschnittansicht durch eine weitere Ausführungsform eines erfindungsgemäßen Befestigungselements mit einem Verbundbauteil und einem Klebstofftropfen;
Fig. 7 eine schematische Längsschnittansicht durch eine weitere Ausführungsform eines Ankerabschnitts vor dem Fügen.

### Detaillierte Beschreibung bevorzugter Ausführungsformen vorliegender Erfindung

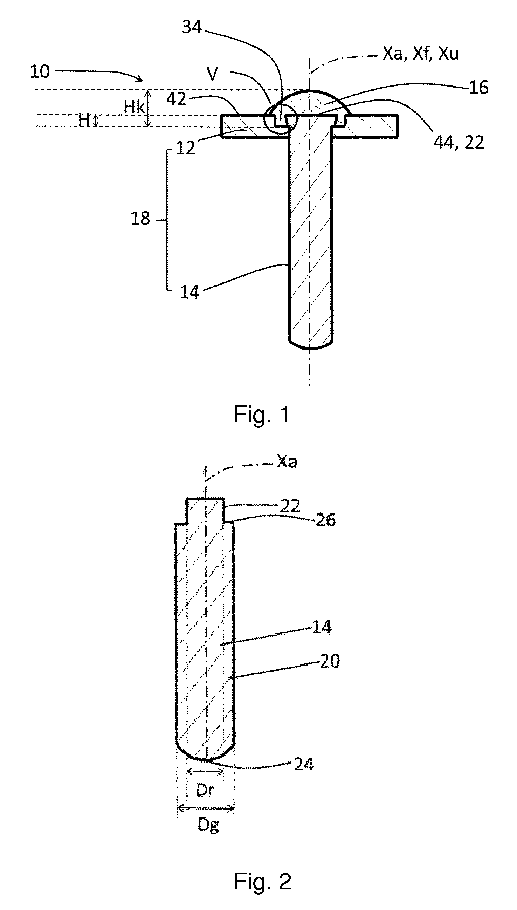

In Fig. 1 ist eine erste Ausführungsform eines Fügeverbundbauteiles schematisch im Längsschnitt dargestellt. Fig. 1 zeigt ein Befestigungselement 10, das ein Flanschelement 12, einen schaftförmigen Ankerabschnitt 14 und einen Klebstofftropfen 16 aufweist.

Das Flanschelement 12 und der schaftförmige Ankerabschnitt 14 bilden ein Verbundbauteil 18 aus. Wie in Fig. 1 dargestellt, ist das Verbundbauteil 18 zweiteilig ausgebildet, bestehend aus zwei unterschiedlichen Einzelteilen, nämlich dem Flanschelement 12 und dem Ankerabschnitt 14. Das Flanschelement 12 und der schaftförmige Ankerabschnitt 14 sind zusammen gefügt.

Fig. 2 stellt den Ankerabschnitt 14 vor dem Fügen schematisch dar. Der Ankerabschnitt 14 ist einstückig ausgebildet. Der Ankerabschnitt 14 weist einen Grundkörper 20, ein erstes und ein zweites Endstück 22, 24 auf. Der Grundkörper 20 ist schaftförmig und erstreckt sich entlang einer Ankerachse Xa zwischen dem ersten Endstück 22 und dem zweiten Endstück 24. Der Grundkörper 20 des Ankerabschnitts 14 kann jeweils die gewünschte Schaftform annehmen. Wie in Fig. 2 dargestellt, kann der Grundkörper 20 einen kreisförmigen Querschnitt haben, im Wesentlichen konstant über seine Länge. In anderen Ausführungsformen könnte der Ankerabschnitt auch einen rechteckigen, dreieckigen, ... Querschnitt haben. Ebenfalls in anderen Ausführungsformen könnte der Grundkörper nicht konstant über seine Länge sein.

Das zweite Endstück 24 des Ankerabschnitts 14 ist vorzugsweise rund wie in Fig. 1 und Fig. 2 bereits dargestellt, aber andere Formen des Endstücks können vorgesehen sein. Zum Beispiel kann das zweite Endstück mit geschnittener Kante vorgesehen sein.

Vor dem Fügen bildet das erste Endstück 22 eine Querschnittsminderung des Grundkörpers 20 aus. Zum Beispiel bildet das erste Endstück 22 einen sich nach innen von dem Grundkörper 20 erstreckenden Verjüngung aus. Eine Zwischenwand 26 kann zwischen dem Grundkörper und dem ersten Endstück 22 vorgesehen sein. Die Zwischenwand 26 verbindet den Grundkörper 20 und das erste Endstück 22 und erstreckt sich quer (nach außen) von dem Grundkörper 20. Die Zwischenwand 26 zwischen dem ersten Endstück 22 und dem Grundkörper 20 bildet einen Sattel aus. Der Sattel bildet einen Anschlag zwischen dem Flanschelement und dem Ankerabschnitt 14.

In Fig. 2 ist der Durchmesser des Grundkörpers mit Dg bezeichnet. Der Durchmesser des ersten Endstücks 22 ist mit Dr bezeichnet. Der Durchmesser Dr des ersten Endstücks 22 ist kleiner als der Durchmesser des Grundkörpers Dg.

Der Ankerabschnitt 14 ist vorzugsweise aus Stahl gebaut. Andere Metalle wie zum Beispiel Aluminium oder andere Materialien können ebenfalls benutzt werden.

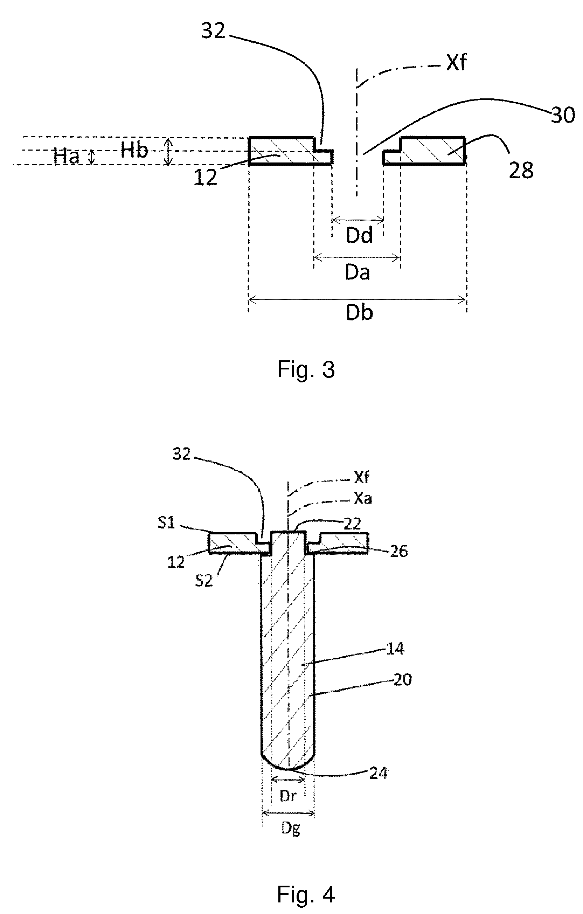

Der Ankerabschnitt 14 kooperiert mit dem Flanschelement 12 und ist mit dem Flanschelement 12 fixiert (bzw. gefügt). Fig. 3 stellt das Flanschelement 12 dar. Das Flanschelement 12 ist vorzugsweise aus Stahl gebaut. Andere Metalle, wie zum Beispiel Aluminium oder andere Materialien können ebenfalls benutzt werden.

Das Flanschelement 12 ist beispielweise konzentrisch zu einer Flanschachse Xf ausgerichtet. Das Flanschelement 12 weist einen Basiskörper 28, eine Durchgangsöffnung 30 und eine Aufnahmevertiefung 32 auf. Das Flanschelement 12 weist einen Basiskörperdurchmesser Db vorzugsweise über 16 Millimetern (mm) auf. Vorzugsweise ist der Basiskörperdurchmesser Db über 20 mm oder noch über 30 mm.

Im vorliegenden Fall ist die Durchgangsöffnung 30 so ausgebildet, dass das erste Endstück 22 des Ankerabschnitts 14 eingesetzt werden kann. Die Durchgangsöffnung 30 kann kreisförmig sein wenn der Grundkörper 20 einen kreisförmigen Querschnitt aufweist. Die Durchgangsöffnung 30 ist zum Beispiel auf der Flanschachse Xf zentriert, wie bereits in Fig. 3 dargestellt. In einer anderen Ausführungsform kann die Durchgangsöffnung 30 relativ zu der Flanschachse Xf verschoben sein. Der Durchmesser der Durchgangsöffnung Dd ist im Wesentlichen gleich (wenig größer als) der Durchmesser Dr des ersten Endstücks 22. Der Durchmesser der Durchgangsöffnung Dd ist im Wesentlichen kleiner als der Durchmesser des Grundkörpers Dg.

Die Aufnahmevertiefung 32 ist im Wesentlichen konzentrisch zu der Flanschachse Xf ausgerichtet. Wie bereits in Fig. 3 dargestellt kann die Aufnahmevertiefung 32 am Umfang der Durchgangsöffnung 30 angeordnet sein.

Die Aufnahmevertiefung 32 weist zum Beispiel einen ringförmigen Querschnitt auf. In anderen Ausführungformen können andere Querschnittformen, regulär oder nicht, vorgesehen sein.

Der Basiskörper 28 ist am Umfang von der Aufnahmevertiefung 32 angeordnet. Wie bereits in Fig. 3 dargestellt, ist der Basiskörperdurchmesser Db jedoch größer als der Durchmesser Da der Aufnahmevertiefung 32. Der Durchmesser Da der Aufnahmevertiefung 32 ist größer als der Durchmesser Dd der Durchgangsöffnung 30 (wenn das Flanschelement, die Aufnahmevertiefung und die Durchgangsöffnung einen ringförmigen Querschnitt aufweisen).

Die Höhe Ha der Aufnahmevertiefung 32 kann kleiner als das 0,8-fache der Höhe Hb des Basiskörpers 28 entlang der Flanschachse Xf sein. In anderen Ausführungsform ist die Höhe Ha der Aufnahmevertiefung 32 kleiner als das 0,5-fache der Höhe Hb des Basiskörpers 28 entlang der Flanschachse Xf.

Die Durchgangsöffnung 30 ist so ausgerichtet, dass der Ankerabschnitt 14, und im Wesentlichen das erste Endstück 22 von dem Ankerabschnitt 14 darin einsetzbar ist. Der Grundkörper 28 weist gegenfalls einen größeren Querschnitt auf und ist durch die Durchgangsöffnung 30 nicht einsetzbar. Das erste Endstück 22 weist einen Querschnitt auf, der kleiner als der Aufnahmevertiefungsquerschnitt ist.

Fig. 4 zeigt wie der Ankerabschnitt 14 und das Flanschelement 12 zusammengesteckt sind. Das Flanschelement weist eine erste und eine zweite Oberfläche S1, S2 auf. Die erste und zweite Oberfläche S1, S2 können sich quer zur Ankerachse Xa erstrecken. Die zweite Oberfläche S2 erstreckt sich gegenseitig von der erste Oberfläche S1. Die erste Oberfläche S1 weist die Aufnahmevertiefung 32 auf. Um das Flanschelement 12 mit dem Ankerabschnitt 14 zusammenzustecken, wird das erste Endstück 22 des Ankerabschnitts 14 durch die Durchgangsöffnung von der zweiten Oberfläche S2 zu der ersten Oberfläche S1 geführt bis das erste Endstück sich in der Aufnahmevertiefung erstreckt und der Sattel zum Anschlag mit der zweiten Oberfläche kommt.

Das Flanschelement 12 ist mit dem Ankerabschnitt 14 durch Umformung verbunden. Das umformtechnische Fügen ist besonders geeignet, um enge Maßtoleranzen und gute Oberflächeneigenschaften zu erreichen. Im Wesentlichen ist der Ankerabschnitt 14 in der Durchgangsöffnung 30 des Flanschelements 12 eingesetzt bis die Zwischenwand 26 zur Auflage mit der Durchgangsöffnung kommt. Die Zwischenwand 26 des Ankerabschnitts wird dann im Sinne einer Vernietung verformt, um den Ankersabschnitt 14 mit dem Flanschelement 12 formschlüssig zu verbinden.

Wie bereits in Fig. 1, Fig. 5 und Fig. 6 dargestellt, greift der Ankerabschnitt 14 mit dem Flanschelement 12 ein. Die Zwischenwand 26 nimmt teilweise die Form des Umlaufs der Durchgangsöffnung 30 an. Zum Beispiel nimmt die Zwischenwand 26 teilweise eine abgewinkelte Form an.

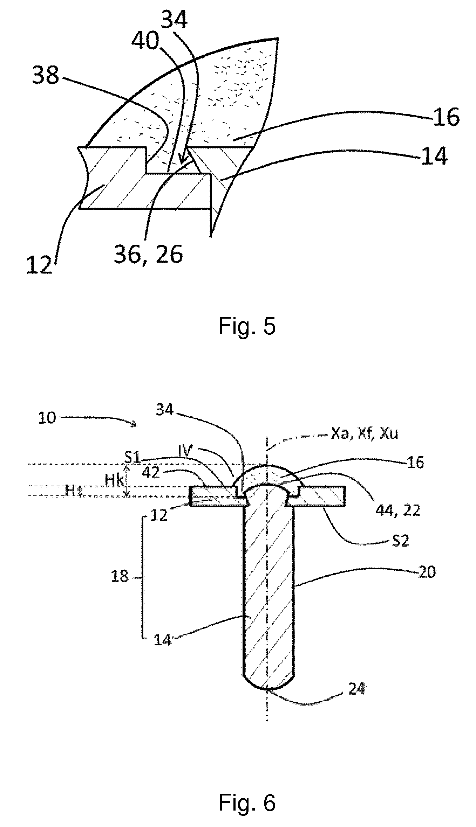

Nach der Verformung bildet das erste Endstück 22 eine Erweiterung des Querschnitts des Grundkörpers 20 aus. Zum Beispiel bildet das erste Endstück 22 einen sich nach außen von dem Grundkörper 20 erstreckenden Ringflansch aus. Die Zwischenwand 26 verbindet den Grundkörper 20 und das erste Endstück 22 und erstreckt sich schräg (nach außen) von dem Grundkörper 20. Fig. 6 stellt eine weitere Ausführungsform von dem ersten Endstück 22 des Ankerabschnitts nach der Verbindung.

Der Ankerabschnitt 14 und das Flanschelement 12 bilden so zusammengefügt eine Ringnut 34, wie in Fig. 1, 5 und 6 dargestellt. Die Ringnut 34 weist eine innen liegende Innenwand 36 und eine außen liegende Innenwand 38 auf. Die Ringnut 34 weist einen inneren Boden 40 auf.

Die innen liegende Innenwand 36 ist durch den Ankerabschnitt 14 ausgebildet. Im Wesentlichen ist die innen liegende Innenwand 36 durch die Zwischenwand 26 und das erste Endstück 22 ausgebildet.

Der innere Boden 40 ist durch das Flanschelement 12 ausgebildet. Der innere Boden 40 wird eigentlich durch die Aufnahmevertiefung 32 ausgebildet.

Die außen liegende Innenwand 38 ist durch das Flanschelement 12 ausgebildet. Die außen liegende Innenwand 38 wird eigentlich durch die Aufnahmevertiefung 32 ausgebildet.

Der innere Boden 40 und die außen liegende Innenwand 38 sind vorzugsweise im Wesentlichen orthogonal zueinander ausgerichtet.

Die innen liegende Innenwand 36 erstreckt sich nach der Verformung des ersten Endstücks 22 schräg von dem inneren Boden 40. Der innere Boden 40 und die innen liegende Innenwand 36 sind vorzugsweise nicht orthogonal zueinander. Die so geformte Ringnut 34 bildet eine Hinterschneidung aus. Die Hinterschneidung erlaubt der Ringnut 34, besonders gut Klebstoff zu halten.

In montiertem Zustand des Ankerabschnitts und Flanschelements sind die Ankerachse und Flanschachse Xf parallel zueinander. Im Wesentlichen fallen die Ankerachse Xa und Flanschachse Xf zusammen. Die Ankerachse bildet vorzugsweise eine Fügeachse Xu.

Das Flanschelement 12 weist eine Fügefläche 42 auf, die quer zur Fügeachse Xu verläuft. Die Ringnut 34, das erste Endstück und zumindest ein Teil der Fügefläche 42 bilden einen Auftragungsabschnitt 44 zum Auftragen eines Klebstoffes aus. Ein Durchmesser des Auftragungsabschnitts ist kleiner als ein Durchmesser des Flanschelements. Der Durchmesser des Auftragungsabschnitts ist beispielsweise mindestens 8 Millimeter kleiner als der Durchmesser des Flanschelements.

Der Klebstofftropfen 16 wird auf den Auftragungsabschnitt 44 aufgebracht.

Der Klebstofftropfen 16 füllt die Ringnut 34 vorzugsweise vollständig aus (wie in Fig. 1, Fig. 5 oder Fig. 6 dargestellt). Die Ringnut 34 bildet eine Klebstoffhalterung aus.

Der Klebstofftropfen 16 wird im erwärmten, verflüssigten Zustand auf den Auftragungsabschnitt 44 aufgebracht. Die Klebstoffschmelze füllt die Ringnut 34 im heißen, flüssigen unvernetzten Zustand vorzugsweise vollständig aus. Der Klebstofftropfen 16 ragt über die Flanscheelementaußenfläche (oder der Fügefläche 42) heraus. Der Klebstofftropfen 16 ist scheibenförmig oder linsenförmig wie bereits in Fig. 1 oder Fig. 6 dargestellt.

Bei der Schrumpfung und der unterschiedlichen Wärmeausdehnung zwischen Verbundbauteil 18 und Klebstofftropfen 16 wird hierbei vorzugsweise eine kraftschlüssige Verklammerung zwischen dem Klebstoff und der Ringnut 34 erzielt, insbesondere in radialer Richtung.

Bei der Verfestigung aufgrund der Abkühlung hat sich der Klebstoff in radialer Richtung zusammengezogen, derart, dass der Klebstoff die Innenwand der Ringnut 34 umklammert und den Klebstofftropfen folglich in axialer Richtung kraftschlüssig hält. Die Innenwand bildet bei der dargestellten Ausführungsform eine Ringkonturfläche, um die herum der Klebstofftropfen 16 aufgebracht worden ist.

Der linsenförmige Klebstofftropfen weist eine axiale Höhe Hk auf. Die axiale Höhe H der Innenwand ist vorzugsweise größer als das 0,3-fache der axialen Höhe Hk des Klebstofftropfens 16.

Vorzugsweise ist der Klebstoff ein Epoxyd-Klebstoff. In anderen Ausführungsformen kann der Klebstoff anderen Formen annehmen.

Das Flanschelement 12 und der Ankerabschnitt 14 können in einem vorhergehenden Prozess (vor dem Verbinden) Korrosionschutz erhalten. Durch die Umformung des Verbundbauteils 18 beim Zusammenfügen der beiden Bauteile (Flanschelement und Ankerabschnitt) kann die Fügezone (22, 26, 36) des Verbundbauteils diesen Korrosionsschutz teilweise verlieren (insbesondere auf der Verbindungstelle). Beim Vorapplizieren des Klebstoffes werden die geschädigten Bereiche mit Klebstoff umschlossen und somit ist der Korrosionsschutz wieder gewährleistet. In anderen Worten bildet der Klebstoff eine Versiegelung, die den Korrosionsschutz wieder hergestellt.

Nach der Abkühlung des Klebstoffes ist das Verbundbauteil transportierbar. Der Klebstoff ist zu einem späteren Zeitpunkt reaktivierbar, um das Verbundbauteil auf ein Werkstück zu kleben.

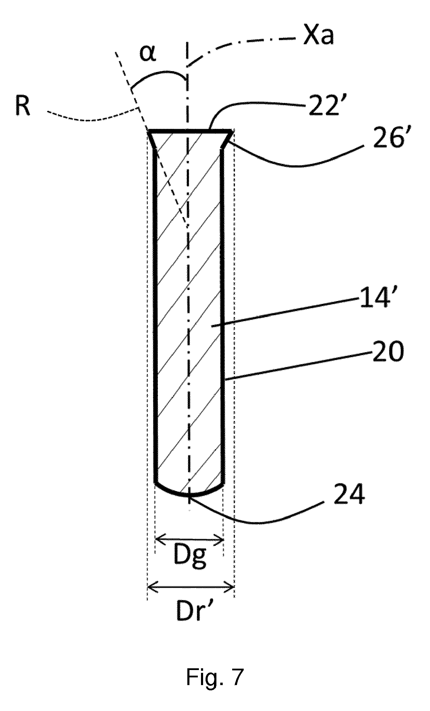

In Fig. 7 ist eine weitere Ausführungsform eines Ankerabschnitts gezeigt, die hinsichtlich Aufbau und Funktionsweise generell dem Ankerabschnitt der Fig. 2 entspricht. Gleiche Elemente sind daher durch gleiche Bezugszeichnen gekennzeichnet. Im Folgenden werden im Wesentlichen die Unterschiede erläutert.

Der in Fig. 7 gezeigte Ankerabschnitt 14' ist einstückig ausgebildet. Der Ankerabschnitt 14' weist einen Grundkörper 20, ein erstes und ein zweites Endstück 22', 24 auf. Der Grundkörper 20 ist schaftförmig und erstreckt sich entlang einer Ankerachse Xa zwischen dem ersten Endstück 22' und dem zweiten Endstück 24. Der Grundkörper 20 des Ankerabschnitts 14' kann jeweils die gewünschte Schaftform annehmen. Wie in Fig. 7 dargestellt, kann der Grundkörper 20' einen kreisförmigen Querschnitt haben, im Wesentlichen konstant über seine Länge. Der Grundkörper 20 weist einen Querschnitt auf der kleiner (oder gleich) als die Durchgangsöffnung des Flanschelements ist. Im vorliegenden Fall ist der Grundkörper 20 so ausgebildet, dass der Grundkörper 20 des Ankerabschnitts 14' in der Durchgangsöffnung eingesetzt werden kann.

Das erste Endstück 22' bildet vor dem Fügen eine Querschnittserweiterung des Grundkörpers 20 aus. Das erste Endstück 22' ist so ausgebildet, dass das erste Endstück 22' in die Durchgangsöffnung nicht eingesetzt werden kann. Die Zwischenwand 26 erstreckt sich entlang einer Erstreckungsrichtung R, die einen von Null verschiedenen Winkel α zu der Ankerachse Xa definiert. Der Winkel α kann beispielsweise zwischen 5 und 85 Grad sein.

In Fig. 7 ist der Durchmesser des Grundkörpers mit Dg bezeichnet. Der Durchmesser des ersten Endstücks 22' ist mit Dr' bezeichnet. Der Durchmesser Dr' des ersten Endstücks 22' ist größer als der Durchmesser des Grundkörpers Dg'.

Um das Flanschelement 12 mit dem Ankerabschnitt 14' zusammenzustecken, wird das Grundkörper 20 des Ankerabschnitts 14' durch die Durchgangsöffnung von der ersten Oberfläche S1 zu der zweiten Oberfläche S2 des Flanschelementes geführt bis das erste Endstück sich in der Aufnahmevertiefung erstreckt und zum Anschlag mit der ersten Oberfläche kommt.

Nach dem Zusammenstecken werden der Ankerabschnitt 14' und das Flanschelement 12 zusammengefügt. Das Fügen kann beispielweise durch Vernieten gesehen. In anderen Ausführungsformen können auch andere Verbindungen (z.B. Schrumpfverbindung, Pressverbände, nichtlösbare Klemmverbindung, usw.) benutzt werden.

Das erste Endstück 22, 22' bildet beispielsweise einen Nietkopf nach dem Fügen, dessen Querschnitt größer als der Durchmesser der Durchgangsöffnung und kleiner als der Durchmesser (oder Querschnitt) der Aufnahmevertiefung ist. Der Nietkopf bildet mit der Aufnahmevertiefung eine Ringnut 34 aus, die teilweise den Auftragungsabschnitt 44 zum Auftragen des Klebstoffes definiert. Die Form des Nietkopfs bildet mit der Aufnahmevertiefung 32 zusammen eine Hinterschneidung.

## Patentansprüche

1. Verbundbauteil (18) mit:
- einem schaftförmigen Ankerabschnitt (14, 14'), der einen Grundkörper (20), ein erstes und ein zweites Endstück (22, 24, 22', 24') aufweist, der Grundkörper (20) sich erstreckend zwischen dem ersten und dem zweiten Endstück (22, 24, 22') entlang einer Fügeachse (Xu);
- einem Auftragungsabschnitt (44) zum Auftragen eines Klebstoffes;
- einem Flanschelement (12),
**dadurch gekennzeichnet dass** das Flanschelement (12) mit einem Basiskörper (28), einer Durchgangsöffnung (30) und einer Aufnahmevertiefung (32) ausgebildet ist,
wobei der Ankerabschnitt (14, 14') in der Durchgangsöffnung (30) eingesetzt ist, wobei der Ankerabschnitt (14, 14') mit dem Flanschelement (12) gefügt ist, wobei das erste Endstück (22) sich in die Aufnahmevertiefung (32) erstreckt,
wobei die Aufnahmevertiefung (32) und das erste Endstück (22) eine Ringnut (34) ausbilden, wobei die Ringnut (34) teilweise den Auftragungsabschnitt (44) definiert.

2. Verbundbauteil (18) nach Anspruch 1, wobei die Aufnahmevertiefung (32) am Umfang der Durchgangsöffnung (30) angeordnet ist.

3. Verbundbauteil (18) nach Anspruch 1 oder 2, wobei die Ringnut (34) um die Fügeachse (Xu) umlaufend ausgebildet ist.

4. Verbundbauteil (18) nach einem der Ansprüche 1 - 3, wobei das erste Endstück (22) eine Erweiterung des Querschnitts des Grundkörpers (20) ausbildet.

5. Verbundbauteil (18) nach einem der Ansprüche 1 - 5, wobei4die Ringnut (34) eine innen liegende Innenwand (36) und eine außen liegende Innenwand (38) aufweist, wobei die innen liegende Innenwand (36) durch den Ankerabschnitt (14, 14') ausgebildet ist, und wobei die außen liegende Innenwand (38) durch das Flanschenelement (12) ausgebildet ist.

6. Verbundbauteil (18) nach Anspruch 5, wobei die innen liegende Innenwand (36) einen von Null verschiedenen Winkel (α) zu der Fügeachse (Xu) aufweist.

7. Verbundbauteil (18) nach einem der Ansprüche 1 - 6, wobei das erste Endstück (22, 22') eine Endfläche aufweist, die quer zu Fügeachse (Xu) verläuft, wobei das Flanschelement (12) eine Fügefläche aufweist, die quer zur Fügeachse (Xu) verläuft und wobei die Ringnut (34), die Endfläche und zumindest ein Teil der Fügefläche den Auftragungsabschnitt (44) ausbilden.

8. Verbundbauteil (18) nach einem der Ansprüche 1 - 7, wobei die Höhe der Aufnahmevertiefung (32) kleiner als die Hälfte der Höhe des Basiskörpers (28) entlang der Fügeachse ist.

9. Befestigungselement (10) mit einem Verbundbauteil (18) nach einem der Ansprüche 1-8 und einem auf den Auftragungsabschnitt (44) aufgebrachten Klebstofftropfen (16).

10. Befestigungselement (10) nach Anspruch 9, wobei die Ringnut (34) eine Hinterschneidung aufweist, die den Klebstofftropfen hält.

11. Verfahren zum Herstellen eines Befestigungselements (10), insbesondere nach Anspruch 9, mit den Schritten:
- Bereitstellen eines schaftförmigen Ankerabschnitts (14, 14'), der einen Grundkörper (20), ein erstes und ein zweites Endstück (22, 24) aufweist, der Grundkörper (20) erstreckt sich zwischen dem ersten und dem zweiten Endstück (22, 24, 22', 24') entlang einer Ankerachse (Xa);
- Bereitstellen eines Flanschelements (12) mit einem Basiskörper (28), einer Durchgangsöffnung (30) und einer Aufnahmevertiefung (32);
- Einsetzen des Ankerabschnitts (14, 14') in die Durchgangsöffnung (30), das erste Endstück (22) erstreckt sich in der Aufnahmevertiefung (32), wobei die Aufnahmevertiefung (32) und das erste Endstück (22) eine Ringnut (34) ausbilden und die Ringnut (34) teilweise einen Auftragungsabschnitt (44) definiert;
- Verbinden des Ankerabschnitts (14, 14') mit dem Flanschelement (12);
- Auftragen eines erwärmten Klebstoffes auf wenigstens den Auftragungsabschnitt (44) und in die ausgebildete Ringnut (34), um die herum der Klebstoff aufgebracht wird;
- Abkühlen des Klebstoffes, derart, dass das so hergestellte Befestigungselement (10) transportierbar ist und der Klebstoff zu einem späteren Zeitpunkt reaktivierbar ist, um das Befestigungselement auf ein Werkstück zu kleben.

12. Verfahren nach Anspruch 11, wobei der Ankerabschnitt (14, 14') mit dem Flanschelement durch Umformung, bzw. durch Kaltumformung, verbunden ist.

13. Verfahren nach Anspruch 11 oder 12, wobei der Klebstoff auf den Auftragungsabschnitt (44) aufgetragen wird, und auf dem Auftragungsabschnitt (44) eine Linsenform bildet.

14. Verfahren nach einem der Ansprüche 11-13, wobei der Ankerabschnitt (14, 14') und das Flanschelement (12) Korrosionschutz vor dem Verbinden erhalten und wobei den Klebstofftropfen eine Korrosionsschutzversiegelung bildet.
